# EUROPÄISCHE PATENTSCHRIFT

(11) **EP 1 946 949 B1**
(45) Veröffentlichungstag und Bekanntmachung des Hinweises auf die Patenterteilung: **14.04.2010**
(21) Anmeldenummer: 07033589.8
(22) Anmeldetag: 27.12.2007
(51) Int. Cl.: B60H 1/00

(54) **Verfahren zum Steuern einer Klimaanlage**
Air-conditioning system for a vehicle
Dispositif de climatisation pour un véhicule automobile

(30) Priorität: 17.01.2007 DE 102007002413
(43) Veröffentlichungstag der Anmeldung: 23.07.2008
(73) Patentinhaber: Enerday GmbH, 82131 Stockdorf (DE)
(72) Erfinder: Pfalzgraf, Manfred, 82211 Herrsching am Ammersee (DE); Bedenbecker, Markus, 82131 Gauting (DE); Boltze, Matthias, 17039 Wulkenzin (OT Neuendorf) (DE); Engl, Andreas, 80689 München (DE)
(74) Vertreter: Schumacher & Willsau

(56) Entgegenhaltungen:
- WO-A-2005/102746
- DE-A1- 10 223 949
- DE-A1-102004 020 741

## Beschreibung

Die Erfindung betrifft ein Verfahren zum Steuern einer Klimaanlage zur Standklimatisierung eines Kraftfahrzeugs, welche ein Brennstoffzellensystem zum Betreiben eines Kältekreises aufweist.

Darüber hinaus betrifft die Erfindung eine Klimaanlage zur Standklimatisierung eines Kraftfahrzeugs, mit einem Brennstoffzellensystem zum Betreiben eines Kältekreises.

Aus der DE 102 23 949 A1 ist eine Klimaanlage mit einer Brennstoffzelle zur Standklimatisierung eines Fahrzeugs bekannt. Fahrzeuge haben in der Regel jedoch auch eine konventionelle Klimaanlage, die von einem Verbrennungsmotor antreibbar ist. Falls eine Standklimaanlage nachträglich in das Fahrzeug nachgerüstet wird stellt sich zusätzlich zur Frage der Nachrüstbarkeit auch die Frage, wie die Standklimaanlage und die konventionelle Klimaanlage aufeinander abgestimmt werden können, um einen größtmöglichen Klimatisierungskomfort zu erreichen.

WO 2005/102746 offenbart eine Klimaanlage nach dem Oberbegriff des Anspruchs 1.

Es ist daher die Aufgabe der vorliegenden Erfindung die gattungsgemäße Klimaanlage derart weiterzubilden, dass eine verbesserte Abstimmung mit der konventionellen Klimaanlage gewährleistet werden kann.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das erfindungsgemäße Verfahren baut auf dem gattungsgemäßen Stand der Technik dadurch auf, dass die Klimaanlage wahlweise bei Erreichen einer Abschaltbedingung abgeschaltet wird oder eine vorgegebene Zeitspanne nach Erreichen der Abschaltbedingung automatisch abgeschaltet wird. Eine Abschaltbedingung deutet im Rahmen dieser Erfindung darauf hin, dass eine konventionelle Klimaanlage zur Verfügung steht. Solche konventionelle Klimaanlagen benötigen durchaus eine gewisse Zeit bis sie ihre volle Kühlleistung erreichen. Durch das erfindungsgemäße Verfahren kann die Standklimaanlage jedoch auf Wunsch für eine bestimmte Zeitspanne weiterbetrieben werden bis die konventionelle Klimaanlage die volle Kühlleistung erreicht hat - diese Funktion wird im folgenden als Nachklimatisierung bezeichnet. Somit wird eine klimatisierungslose Zeitspanne überbrückt, die entstehen würde, wenn die Standklimaanlage sofort mit Inbetriebnahme der konventionellen Klimaanlage abgeschaltet werden würde.

Vorteilhafterweise kann dabei vorgesehen sein, dass die Abschaltbedingung der Start eines Antriebsaggregats zum Antreiben des Kraftfahrzeugs ist. Somit wird mit dem Start des Antriebsaggregats der Standklimaanlage mitgeteilt, dass die konventionelle Klimaanlage zur Verfügung steht.

Alternativ kann dabei vorgesehen sein, dass die Abschaltbedingung der Start einer konventionellen Klimaanlage ist.

Darüber hinaus ist vorteilhaft, dass die vorgegebene Zeitspanne vom Benutzer festlegbar ist. Der Benutzer kann somit nicht nur entscheiden, ob er die oben beschriebene Nachklimatisierung zur Vermeidung einer klimatisierungslosen Zeitspanne wünscht, sondern auch für welchen Zeitraum die Standklimaanlage die Nachklimatisierung durchführen soll.

Ferner kann vorgesehen sein, dass die vorgegebene Zeitspanne abhängig von einer Außentemperatur durch eine elektronische Steuereinheit festgelegt wird. Diese Weiterbildung hat den Vorteil, dass die Zeitspanne abhängig von der Höhe des Klimatisierungsbedarfs ausgewählt wird. Ist beispielsweise die Außentemperatur sehr hoch, dann wird die konventionelle Klimaanlage mehr Zeit benötigen, bis sie die relativ hohe geforderte Kühlleistung zu erzeugen in der Lage ist, daher muss bei einer sehr hohen Außentemperatur (was auf einen hohen Klimatisierungsbedarf schließen läßt) die Zeitspanne der Nachklimatisierung länger sein.

Die erfindungsgemäße Klimaanlage stellt die vorstehend genannten Vorteile in übertragener Weise bereit.

Eine bevorzugte Ausführungsform der Erfindung wird nachfolgend mit Bezug auf die begleitenden Zeichnungen beispielhaft erläutert.

Es zeigen:
- Figur 1: eine schematische Darstellung einer erfindungsgemäßen Klimaanlage;
- Figur 2: eine schematische Darstellung des Kraftfahrzeugs mit der erfindungsgemäßen Klimaanlage;
- Figur 3: ein Flussdiagramm des erfindungsgemäßen Klimatisierungsbetriebs; und
- Figur 4: ein Flussdiagramm des Nachklimatisierungsbetriebs der erfindungsgemäßen Klimaanlage 12.

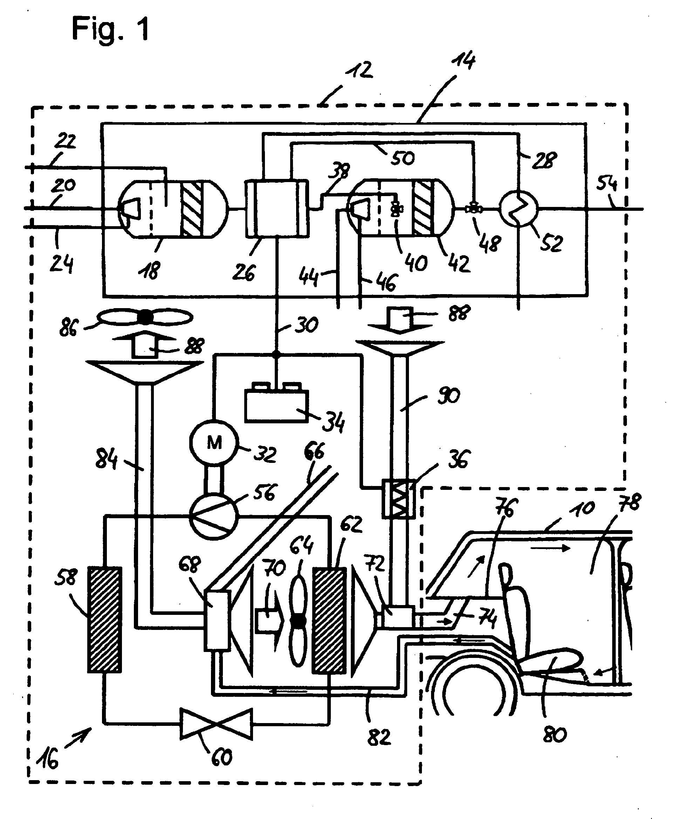

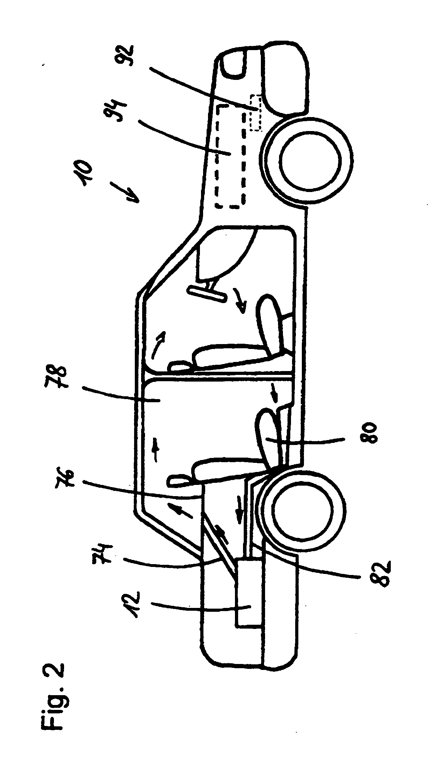

Figur 1 zeigt eine schematische Darstellung einer erfindungsgemäßen Klimaanlage. Die in einem Kraftfahrzeug 10 installierte Klimaanlage 12 (Einbaulage siehe Fig. 2), die in Figur 1 mit einer gestrichelten Linie umrissen ist, umfasst als Hauptelemente ein Brennstoffzellensystem 14 und einen Kältekreis 16.

Das Brennstoffzellensystem 14 umfasst einen Reformer 18, dem über einen Brennstoffstrang 20 aus einem nicht dargestellten Brennstofftank Brennstoff zuführbar ist. Ferner ist dem Reformer 18 an einer zweiten Brennstoffzuführstufe mittels eines Brennstoffstrangs 22 ebenfalls aus dem Brennstofftank Brennstoff zuführbar. Als Brennstoffsorten kommen Diesel, Benzin, Erdgas und weitere aus dem Stand der Technik bekannte Brennstoffsorten in Frage. Weiterhin ist dem Reformer 18 über einen Oxidationsmittelstrang 24 Oxidationsmittel, d.h. insbesondere Luft, zuführbar. Das von dem Reformer 18 erzeugte Reformat ist einem Brennstoffzellenstapel 26 zuführbar. Alternativ kann anstatt des Brennstoffzellenstapels 26 auch nur eine Brennstoffzelle vorgesehen sein. Bei dem Reformat handelt es sich um ein wasserstoffhaltiges Gas, das in dem Brennstoffzellenstapel 26 mit Hilfe von über einen Kathodenzuluftstrang 28 geförderter Kathodenzuluft unter Erzeugung von elektrischer Energie und Wärme umgesetzt wird. Die erzeugte elektrische Energie ist über eine elektrische Leitung 30 einem Elektromotor 32, einer Batterie 34 und einer elektrischen Heizeinrichtung 36 der Klimaanlage 12 zuführbar. Im dargestellten Fall ist das Anodenabgas über einen Anodenabgasstrang 38 einer Mischeinheit 40 eines Nachbrenners 42 zuführbar. Ferner ist dem Nachbrenner 42 über einen Brennstoffstrang 44 Brennstoff aus dem Brennstofftank und über einen Oxidationsmittelstrang 46 Oxidationsmittel zuführbar. In den Brennstoffsträngen 20, 22 und 44 sind geeignete, nicht dargestellte Fördereinrichtungen, wie beispielsweise Pumpen, angeordnet. Ebenso sind in den Oxidationsmittelsträngen 24 und 46 entsprechende, nicht dargestellte Fördereinrichtungen, in diesem Fall vorzugsweise Gebläse, angeordnet. Diese Fördereinrichtungen können direkt vom Brennstoffzellenstapel 26 oder von der Batterie 34 mit Strom versorgt werden. In dem Nachbrenner 42 erfolgt eine Umsetzung des abgereicherten Anodenabgases mit dem geförderten Brennstoff und Oxidationsmittel zu einem Verbrennungsabgas, welches in einer Mischeinheit 48 mit Kathodenabluft vermischt wird, die über einen Kathodenabluftstrang 50 von dem Brennstoffzellenstapel 26 zu der Mischeinheit 48 gefördert wird. Das schadstoffarme Verbrennungsabgas durchströmt einen Wärmetauscher 52 zum Vorwärmen der Kathodenzuluft und verlässt schließlich das Brennstoffzellensystem 14 über einen Abgasauslass 54.

In dem Kältekreis 16 sind ein Kompressor 56, ein Kondensator 58, ein Expansionsorgan 60 und ein Verdampfer 62 angeordnet. Der Kompressor 56 ist von dem Elektromotor 32 antreibbar, welcher wiederum vorzugsweise durch den Brennstoffzellenstapel 26 des Brennstoffzellensystems 14 mit Energie versorgt wird, aber kurzzeitig auch von der Batterie 34 mit Energie versorgt werden kann. Dem Verdampfer 62 ist ein Gebläse 64 zugeordnet. Über eine Außenluftleitung 66 kann von Außen Umgebungsluft angesaugt werden. Der Begriff "von Außen", wie er im Zusammenhang mit dieser Erfindung verwendet wird, bedeutet dabei von außerhalb des Innenraumes 78, bezeichnet somit die das Kraftfahrzeug 10 umgebende Luft. Die Außenluftleitung 66 führt zu einer Stelleinrichtung 68, welche die Außenluft dem Gebläse 64 zuführen kann. Die von der Stelleinrichtung 68 zum Gebläse 64 geleitete Luft strömt als Luftstrom 70 an dem Verdampfer 62 vorüber. Auf diese Weise kann dem Luftstrom 70 durch den Verdampfer 62 Wärmeenergie entzogen werden. Der gekühlte Luftstrom kann dann über eine Stelleinrichtung 72 und eine Luftführung 74 über eine Hutablage 76 einem Fahrzeuginnenraum 78 zugeführt werden. Die Stelleinrichtung 72 kann beispielsweise durch ein Elektromagnetventil oder durch Rückschlagventile, welche jeweils nur eine Strömung von den beiden Zuleitungen hin zur Luftführung 74 zulassen, realisiert werden. Die gekühlte Luft strömt durch den Fahrzeuginnenraum 78 (wie durch Pfeile in Fig. 2 veranschaulicht) und verlässt diesen unterhalb einer Sitzbank 80, vorzugsweise der hinteren Sitzbank. Anschließend strömt die Luft über eine Luftführung 82 zurück zu der Stelleinrichtung 68, wo sie ganz oder teilweise nach Außen abgeführt wird oder zurück zum Gebläse 64 geleitet wird. Für die Führung der Luft nach Außen ist eine entsprechende Leitung vorgesehen, die aus Gründen der Übersichtlichkeit nicht dargestellt ist. Über die Schaltung der Stelleinrichtung 68 lässt sich somit wahlweise ein Frischluft- oder ein Umluftkonzept realisieren, bei dem Luft von Außen über die Außenluftleitung 66 angesaugt wird oder die Luft aus der Luftführung 82 rezirkuliert wird. Auch Mischformen dieser Betriebsarten sind möglich. Ferner kann mittels der Stelleinrichtung 68, die über die Außenluftleitung 66 eingeleitete Luft einer Luftführung 84 und über diese einem Gebläse 86 zugeführt werden. In diesem Falle strömt diese Luft als Luftstrom 88 an heißen Teilen des Brennstoffzellensystems 14 direkt vorüber oder durch (nicht dargestellte) Wärmetauscher, die zwischen dem Luftstrom 88 und den heißen Teilen vermitteln. Die heißen Teile des Brennstoffzellensystems 14 sind vorzugsweise der Reformer 18, der Brennstoffzellenstapel 26 und der Nachbrenner 42. Auf diese Weise kann durch die Abwärme der heißen Teile des Brennstoffzellensystems 14 dem Luftstrom 88 Wärmeenergie zugeführt werden. Der erwärmte Luftstrom 88 führt über eine Luftführung 90 zu der elektrischen Heizeinrichtung 36, die direkt von einer vom Brennstoffzellenstapel 26 erzeugten oder von der Batterie 34 gespeicherten Energie versorgt wird. Somit kann in einem Heizbetrieb die ohnehin schon vorgewärmte Luft in der Luftführung 90 weiter erwärmt werden und über die Stelleinrichtung 72 und die Luftführung 74 dem Innenraum 78 zugeführt werden. Nach dem Durchströmen des Innenraums 78 führt der Luftstrom über die Luftführung 82 zur Stelleinrichtung 68, wo er entweder nach Außen abgeführt wird oder zurück zum Gebläse 86 geleitet wird. Auch hierbei lässt sich über die Schaltung der Stelleinrichtung 68 somit wahlweise in einem solchen Heizbetrieb ein Umluftkonzept realisieren, bei dem Luft von Außen über die Außenluftleitung 66 angesaugt wird oder die Luft aus der Luftführung 82 rezirkuliert wird.

Nachfolgend werden verschiedene Betriebszustände aufgezeigt, die mittels der vorstehend beschriebenen Klimaanlage realisierbar sind:

Kühlbetrieb mit Umluftzirkulation: In diesem Betriebszustand ist die Stelleinrichtung 68 so geschaltet, dass Luft aus dem Innenraum 78 über die Luftführung 82 zu dem Gebläse 64 geführt wird. Dieser Luftstrom 70 wird gekühlt und über die Stelleinrichtung 72 und die Luftführung 74 in den Innenraum 78 geführt, wodurch dieser gekühlt wird. Um im Kühlbetrieb ein Aufheizen des Kofferraums, in dem die Klimaanlage 12 angeordnet ist, zu vermeiden, sind entsprechende (nicht dargestellte) Gebläse und Leitungen vorgesehen, welche die Abwärme der Klimaanlage 12 (insbesondere des Brennstoffzellensystems 14, des Kondensators 58, des Kompressors 56 und des Elektromotors 32) nach Außen abführen. Im Falle des Kondensators 58 könnte dieser alternativ auch Außen am Fahrzeug 10 angeordnet werden, um somit die Abwärme direkt abzutransportieren.

Kühlbetrieb mit Außenluftzuführung: In diesem Betriebszustand ist die Stelleinrichtung 68 so geschaltet, dass Außenluft über die Außenluftleitung 66 zu dem Gebläse 64 geführt wird. Der Luftstrom 70 wird gekühlt und über die Stelleinrichtung 72 und die Luftführung 74 in den Innenraum 78 geführt. Der über die Luftführung 82 aus dem Innenraum 78 führende Luftstrom wird von der Stelleinrichtung 68 nach Außen abgegeben. Hinsichtlich des Abführens der Abwärme der Klimaanlage 12 werden die im Rahmen des vorstehend beschriebenen Kühlbetriebs erläuterten Maßnahmen ergriffen.

Heizbetrieb mit Umluftzirkulation: In diesem Betriebszustand wird über die Luftführung 82, die Stelleinrichtung 68 und die Luftführung 84 ein Luftstrom 88 aus dem Innenraum 78 zum Gebläse 86 geführt. Der Kältekreis 16 ist nicht in Betrieb, d.h. der Elektromotor 32 wird nicht betrieben. Das Gebläse 86 führt den Luftstrom 88 an den heißen Teilen des Brennstoffzellensystems 14 vorüber. Die auf diese Weise vorgewärmte Luft wird mittels der Luftführung 90 zu der elektrischen Heizeinrichtung 36 und weiter zur Stelleinrichtung 72 geführt. Die elektrische Heizeinrichtung 36 wird zur Erwärmung der Luft in der Luftführung 90 mit elektrischem Strom betrieben. Anschließend strömt die erwärmte Luft über die Stelleinrichtung 72 und die Luftführung 74 in den Innenraum 78.

Heizbetrieb mit Außenluftzuführung: In diesem Betriebszustand wird Außenluft über die Außenluftleitung 66 von der Stelleinrichtung 68 der Luftführung 84 zugeführt. Die durch den Betrieb des Brennstoffzellensystem 14 entstehende Abwärme erwärmt den Luftstrom 88. Dieser erwärmte Luftstrom wird, wie im vorstehend beschriebenen Betriebszustand, über die Luftführung 90, die elektrische Heizeinrichtung 36, die Stelleinrichtung 72 und die Luftführung 74 in den Innenraum 78 geleitet. Anschließend wird dieser Luftstrom über die Luftführung 82 zur Stelleinrichtung 68 geführt, wo er nach Außen abgegeben wird.

Diese unterschiedlichen Betriebszustände werden über eine elektronische Steuereinheit angesteuert, die je nach Temperatur im Innenraum 78, Außentemperatur, eingestellten Solltemperaturen und gewünschtem Klimatisierungsbetrieb den geeigneten Betriebszustand auswählt. Diese elektronische Steuereinheit ist aus Gründen der Übersichtlichkeit in den Figuren nicht dargestellt, jedoch ist dem Fachmann sofort ersichtlich, dass diese zumindest mit den entsprechenden Fördereinrichtungen in den Strängen 20, 22, 24, 44 und 46 der Energieverteilung in der elektrischen Leitung 30, den Gebläsen 64 und 86, der elektrischen Heizeinrichtung, dem Elektromotor 32, den Stelleinrichtungen 68 und 72, den entsprechenden Temperatursensoren sowie einem Zündschloß des Kraftfahrzeugs 10 oder einer konventionellen Klimaanlage zum Erfassen ihres Betriebszustandes verbunden ist.

Figur 2 zeigt eine schematische Darstellung des Kraftfahrzeugs 10 mit der erfindungsgemäßen Klimaanlage 12. In Figur 2 ist insbesondere die Einbaulage der Klimaanlage 12 veranschaulicht. Die erfindungsgemäße Klimaanlage 12 ist im Kofferraum montierbar, vorzugsweise als nachrüstbare Einheit. Zusätzlich zur beschriebenen Klimaanlage 12 hat das Kraftfahrzeug 10 eine konventionelle Klimaanlage 92, bei der ein Kompressor eines herkömmlichen Kältekreises mechanisch von einem Antriebsaggregat 94, vorzugsweise einem Verbrennungsmotor, antreibbar ist. Während der Fahrt des Kraftfahrzeugs 10 und dem damit verbundenen Betrieb des Antriebsaggregats 94 kann der Innenraum 78 über die konventionelle, fahrzeugeigene Klimaanlage 92 in allgemein bekannter Weise gekühlt bzw. mittels Abwärme des Antriebsaggregats 94 erwärmt werden. Bei Stillstand des Antriebsaggregats 94 kann der Innenraum 78 über die erfindungsgemäße Klimaanlage 12 klimatisiert werden.

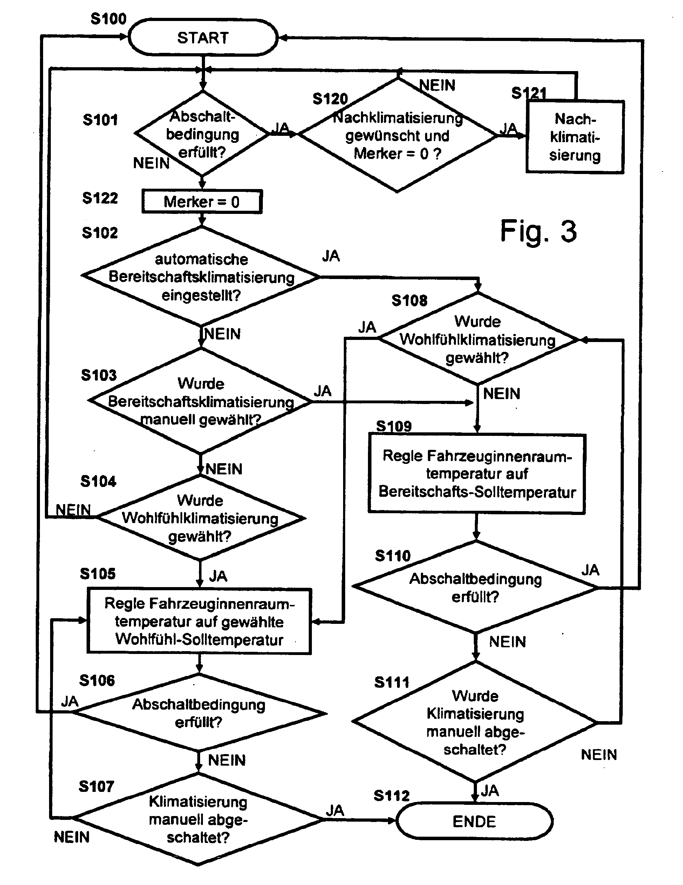

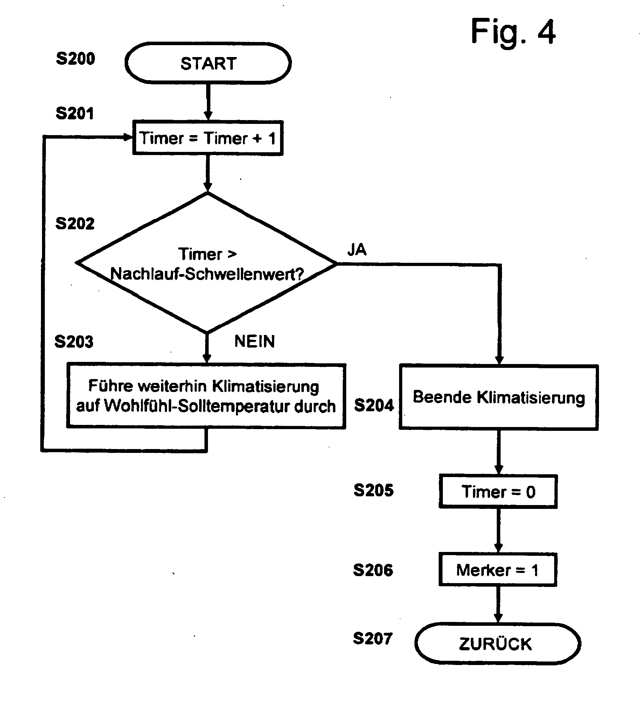

Figur 3 zeigt ein Flussdiagramm des Klimatisierungsbetriebs der erfindungsgemäßen Klimaanlagen 12. Die Routine aus Figur 3, welche von der elektronischen Steuereinheit ausgeführt wird, startet bei Schritt S100, wenn die Klimaanlage 12 manuell eingeschaltet wird. Bei Schritt S101 wird bestimmt, ob eine Abschaltbedingung erfüllt ist. Eine Abschaltbedingung ist im Rahmen dieser Routine beispielsweise der Betrieb des Antriebsaggregats 94, d.h. die Abschaltbedingung ist positiv, wenn das Antriebsaggregat 94 läuft. Eine andere mögliche Abschaltbedingung ist der Betrieb der konventionellen Klimaanlage 92. Diese Abschaltbedingung kann die elektronische Steuereinheit durch Abfrage des Zündschloßes oder über eine elektronische Verbindung mit der konventionellen Klimaanlage 92 bestimmen. Wenn eine Abschaltbedingung erfüllt ist fährt die Routine zu Schritt S120 fort. In Schritt S120 wird bestimmt, ob der Benutzer über eine Schalterstellung oder dergleichen eine Nachklimatisierung wünscht und ob gleichzeitig ein Merker den Wert Null enthält. Falls dies nicht der Fall ist kehrt der Prozess zu Schritt S101 zurück, was in der Praxis bedeutet, dass der Klimatisierungsbetrieb sofort mit Erreichen einer Abschaltbedingung beendet wird und abgeschaltet bleibt, bis die Abschaltbedingung nicht mehr erfüllt ist. Der Merker ist vorgesehen, um anzuzeigen, ob bereits eine Nachklimatisierung durchgeführt wurde. Wird in Schritt S120 bestimmt, dass eine Nachklimatisierung gewünscht ist und der Merker Null ist, dann fährt die Routine zu Schritt S121 fort, wo der Prozessablauf aus Figur 4 durchgeführt wird. Nach dem Ausführen der Routine aus Figur 4 kehrt die Routine zu Schritt S101 zurück. Ausgehend von S101 fährt der Prozess erst dann zu Schritt S122 fort, wenn die Abfrage in Schritt S101 negativ ist. In Schritt S122 wird der Merker auf den Wert Null gesetzt. Somit wird über den Merker erreicht, dass erst dann wieder eine Nachklimatisierung durchgegeführt wird, nachdem zwischenzeitlich die Abschaltbedingung nicht mehr erfüllt war, also beispielsweise ein Verbrennungsmotor abgestellt wurde. Anschließend wird in Schritt S102 bestimmt, ob der Benutzter über einen Auswahlschalter oder eine entsprechende Programmierung der Klimaanlage 12 einen automatischen Bereitschaftsklimatisierungsbetrieb ausgewählt hat. Falls dies nicht der Fall ist, fährt der Prozess zu Schritt S103 fort, wo bestimmt wird, ob der Benutzer manuell eine Bereitschaftsklimatisierung ausgewählt hat. Ist dies nicht der Fall, dann fährt der Prozess zu Schritt S104 fort, wo bestimmt wird, ob der Benutzer manuell eine Wohlfühlklimatisierung ausgewählt hat. Falls dies mit "JA" zu beantworten ist, fährt der Prozess zu Schritt S105 fort, bei dem eine Wohlfühlklimatisierung durchgeführt wird. Bei dieser Wohlfühlklimatisierung wird der Innenraum 78 des Kraftfahrzeugs 10 auf eine Wohlfühltemperatur (z.B. 18°C) klimatisiert, indem eine Auswahl aus den verschiedenen Heiz- und Kühlmodi von der elektronischen Steuereinheit getroffen wird. Mit dem nachfolgenden Schritt S106 wird festgelegt, dass diese Wohlfühlklimatisierung automatisch gestoppt wird, wenn die bereits erläuterte Abschaltbedingung erfüllt ist. Wenn in Schritt S106 demnach bestimmt wird, dass die Abschaltbedingung nicht erfüllt ist, wird in S107 bestimmt, ob die Klimaanlage 12 manuell abgestellt wurde. Bei einer manuellen Abschaltung endet der Prozess bei Schritt S112, ansonsten kehrt der Prozess zurück zu Schritt S105. Falls der Benutzer in Schritt S104 keine Wohlfühlklimatisierung gewählt hat, kehrt der Prozess zu Schritt S101 zurück. Falls in Schritt S102 bestimmt wurde, dass eine automatische Bereitschaftsklimatisierung gewählt wurde, dann fährt der Prozess von dort zu Schritt S108 fort, wo bestimmt wird, ob von dem Benutzer manuell eine Wohlfühlklimatisierung gewählt wurde. Ist dies der Fall, dann fährt der Prozess zu Schritt S105 fort, wo die bereits beschriebene Wohlfühlklimatisierung durchgeführt wird. Falls in Schritt S108 bestimmt wird, dass der Benutzer keine Wohlfühlklimatisierung ausgewählt hat, dann fährt der Prozess zu Schritt S109 fort, wo die erfindungsgemäße Bereitschaftsklimatisierung durchgeführt wird. Bei dieser Bereitschaftsklimatisierung wird die Temperatur im Innenraum 78 auf eine Bereitschafts-Solltemperatur (z.B. 25°C) geregelt, die sich von der Wohlfühltemperatur unterscheidet. Dies wird realisiert, indem die elektronische Steuereinheit in geeigneter Weise aus den beschriebenen Heiz- und Kühlbetriebsarten auswählt. Ist die Außentemperatur hoch, dann ist die Bereitschafts-Solltemperatur größer als die Wohlfühltemperatur. Ist hingegen die Außentemperatur niedrig, dann ist die Bereitschafts-Solltemperatur geringer als die Wohlfühltemperatur. Somit wird beispielsweise bei hoher Außentemperatur ein Aufheizen des Innenraumes 78 verhindert und im Bedarfsfall ein sehr schnelles Erreichen der Wohlfühltemperatur gewährleistet, weil der Innenraum 78 bereits "vorgekühlt" ist. Nach Schritt S109 fährt der Prozess zu Schritt S110 fort, wo überprüft wird, ob eine der beiden erläuterten Abschaltbedingungen erfüllt ist. Ist dies der Fall, dann kehrt der Prozess zu Schritt S100 zurück. Ansonsten fährt der Prozess zu Schritt S111 fort, wo bestimmt wird, ob der Benutzer die Klimatisierung manuell abgestellt hat - wenn "JA", dann endet der Prozess bei Schritt S112 und wenn "NEIN", dann kehrt der Prozess zu Schritt S108 zurück.

Figur 4 zeigt ein Flussdiagramm des Nachklimatisierungsbetriebs der erfindungsgemäßen Klimaanlage 12. Die Routine aus Figur 4, welche von der elektronischen Steuereinheit ausgeführt wird, startet bei Schritt S200, wenn der Schritt S121 aus Figur 3 erreicht wird. Anschließend wird in Schritt S201 ein Timer um den Wert 1 erhöht. In Schritt S202 wird dann der Wert des Timers mit einem Nachlauf-Schwellenwert verglichen, der einer vorgegebenen Zeitspanne entspricht. Solange diese vorgegebene Zeitspanne nicht erreicht ist, fährt die Routine von Schritt S202 zu Schritt S203 fort, in dem weiterhin eine Nachklimatisierung durchgeführt wird. Bei der Nachklimatisierung wird der Fahrzeuginnenraum 78 weiterhin auf die Wohlfühl-Solltemperatur klimatisiert, wie dies vorstehend beschrieben wurde. Dann kehrt der Prozess zu Schritt S201 zurück, wo der Wert des Timers weiter erhöht wird. Jedes mal wenn die Routine die Schleife aus S201, S202 und S203 wiederholt, verstreicht eine bestimmte Zeit, wobei die Summe dieser Wiederholungszeiten der Zeitdauer der Nachklimatisierung entspricht. Sobald diese Zeitdauer der Nachklimatisierung durch Erreichen des Nachlauf-Schwellenwertes verstrichen ist, fährt die Routine zu Schritt S204 fort, wo die Klimatisierung beendet wird. Anschließend wird der Timer wieder auf Null gesetzt, so dass die Nachlaufklimatisierungszeitspanne beim nächsten Aufruf der Routine aus Figur 4 von vorn abzulaufen beginnt. Außerdem wird in Schritt S206 der Merker auf 1 gesetzt, was verhindert, dass der Prozess aus Figur 4 durch Schritt S120 aus Figur 3 sofort erneut aufgerufen wird, ohne dass sich an der Abschaltbedingung etwas geändert hat. Schließlich kehrt in Schritt S207 die Routine zur Routine aus Figur 3 zurück, wo der Prozess in Schritt S101 fortgesetzt wird.

Der bevorzugte Betrieb der Klimaanlage 12 sieht in der Praxis so aus, dass eine automatische Bereitschaftsklimatisierung gewählt ist. Wird das Antriebsaggregat 94 betrieben, dann kann der Innenraum 78 über die auf das Fahrzeug optimierte, sehr effektive und speziell ausgelegte Klimaanlage 92 klimatisiert werden. Sobald das Antriebsaggregat 94 abgestellt wird (und die Insassen das Kraftfahrzeug 10 eventuell verlassen), startet die Klimaanlage 12 die Bereitschaftsklimatisierung, die den Innenraum bei hoher Außentemperatur auf beispielsweise 25°C kühlt. Dieser Bereitschaftsklimatisierungsbetrieb kann mit 60 Litern Brennstoff problemlos 12 Tage im Dauerbetrieb erfolgen. Der Bereitschaftsklimatisierungsbetrieb wird solange durchgeführt, bis der Benutzer kurz vor Fahrtantritt eine Wohlfühlklimatisierung wählt, die dann den Innenraum 78 auf beispielsweise 18°C kühlt. Die Wohlfühlklimatisierung wird dann solange durchgeführt bis das Antriebsaggregat 94 wieder gestartet wird oder, falls eine Nachklimatisierung gewünscht ist, bis eine vorgegebene Zeitspanne nach dem Starten des Antriebsaggregats 94 verstrichen ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kraftfahrzeug
- 12: Klimaanlage
- 14: Brennstoffzellensystem
- 16: Kältekreis
- 18: Reformer
- 20: Brennstoffstrang
- 22: Brennstoffstrang
- 24: Oxidationsmittelstrang
- 26: Brennstoffzellenstapel
- 28: Kathodenzuluftstrang
- 30: Elektrische Leitung
- 32: Elektromotor
- 34: Batterie
- 36: Elektrische Heizeinrichtung
- 38: Anodenabgasstrang
- 40: Mischeinheit
- 42: Nachbrenner
- 44: Brennstoffstrang
- 46: Oxidationsmittelstrang
- 48: Mischeinheit
- 50: Kathodenabluftstrang
- 52: Wärmetauscher
- 54: Abgasauslass
- 56: Kompressor
- 58: Kondensator
- 60: Expansionsorgan
- 62: Verdampfer
- 64: Gebläse
- 66: Außenluftleitung
- 68: Stelleinrichtung
- 70: Luftstrom
- 72: Stelleinrichtung
- 74: Luftführung
- 76: Hutablage
- 78: Fahrzeuginnenraum
- 80: Sitzbank
- 82: Luftführung
- 84: Luftführung
- 86: Gebläse
- 88: Luftstrom
- 90: Luftführung
- 92: Konventionelle Klimaanlage
- 94: Antriebsaggregat

## Patentansprüche

1. Verfahren zum Steuern einer Klimaanlage (12) zur Standklimatisierung eines Kraftfahrzeugs (10), welche ein Brennstoffzellensystem (14) zum Versorgen eines Kältekreises (16) mit elektrischer Energie aufweist, wobei die Klimaanlage (12) zusätzlich zu einer konventionellen Klimaanlage vorgesehen ist, **dadurch gekennzeichnet, dass** die Klimaanlage (12) wahlweise beim Start der konventionellen Klimaanlage oder eine vorgegebene Zeitspanne nach dem Start der konventionellen Klimaanlage automatisch abgeschaltet wird.

2. Verfahren nach Anspruch 1, **dadurch gekennzeichnet, dass** die vorgegebene Zeitspanne vom Benutzer festlegbar ist.

3. Verfahren gemäß einem der Ansprüche 1 oder 2, **dadurch gekennzeichnet, dass** die vorgegebene Zeitspanne abhängig von einer Außentemperatur durch eine elektronische Steuereinheit festgelegt wird.

4. Klimaanlage (12) zur Standklimatisierung eines Kraftfahrzeugs (10), mit einem Brennstoffzellensystem (14) zum Versorgen eines Kältekreises (16) mit elektrischer Energie, wobei die Klimaanlage (12) zusätzlich zu einer konventionellen Klimaanlage vorgesehen, **dadurch gekennzeichnet, dass** die Klimaanlage (12) wahlweise beim Start der konventionellen Klimaanlage oder eine vorgegebene Zeitspanne nach dem Start der konventionellen Klimaanlage automatisch abschaltbar ist.

## Claims

1. Method for controlling an air-conditioning system (12) for stationary-mode air conditioning of a motor vehicle (10), which has a fuel cell system (14) for supplying a refrigeration circuit (16) with electrical energy, wherein the air-conditioning system (12) is provided in addition to a conventional air-conditioning system, **characterized in that** the air conditioning system (12) is optionally switched off automatically when the conventional air-conditioning system starts or a predefined time period after the conventional air-conditioning system starts.

2. Method according to Claim 1, **characterized in that** the predefined time period can be defined by the user.

3. Method according to one of Claims 1 or 2, **characterized in that** the predefined time period is defined as a function of an external temperature by means of an electronic control unit.

4. Air-conditioning system (12) for stationary-mode air conditioning of a motor vehicle (10), having a fuel cell system (14) for supplying a refrigeration circuit (16) with electrical energy, wherein the air-conditioning system (12) is provided in addition to a conventional air-conditioning system, **characterized in that** the air-conditioning system (12) can optionally be switched off automatically when the conventional air-conditioning system starts or a predefined time period after the conventional air-conditioning system starts.

## Revendications

1. Procédé de commande d'une installation de climatisation (12) pour la climatisation indépendante d'un véhicule automobile (10), qui présente un système de piles à combustible (14) pour l'alimentation d'un circuit de refroidissement (16) en énergie électrique, l'installation de climatisation (12) étant pourvue en plus d'une installation de climatisation conventionnelle, **caractérisé en ce que** l'installation de climatisation (12) est automatiquement coupée de manière sélective au démarrage de l'installation de climatisation conventionnelle ou après une période de temps prédéfinie après le démarrage de l'installation de climatisation conventionnelle.

2. Procédé selon la revendication 1, **caractérisé en ce que** la période de temps prédéfinie peut être définie par l'utilisateur.

3. Procédé selon l'une quelconque des revendications 1 ou 2, **caractérisé en ce que** la période de temps prédéfinie est établie en fonction d'une température extérieure par une unité de commande électronique.

4. Installation de climatisation (12) pour la climatisation indépendante d'un véhicule automobile (10), comprenant un système de piles à combustible (14) pour l'alimentation d'un circuit de refroidissement (16) en énergie électrique, l'installation de climatisation (12) étant prévue en plus d'une installation de climatisation conventionnelle, **caractérisée en ce que** l'installation de climatisation (12) peut être automatiquement coupée de manière sélective au démarrage de l'installation de climatisation conventionnelle ou après une période de temps prédéfinie après le démarrage de l'installation de climatisation conventionnelle.
